# EUROPÄISCHE PATENTSCHRIFT

(11) **EP 0 683 798 B1**
(45) Veröffentlichungstag und Bekanntmachung des Hinweises auf die Patenterteilung: **10.10.2001**
(21) Anmeldenummer: 94906177.4
(22) Anmeldetag: 31.01.1994
(51) Int. Cl.: C08F 232/08, G02B 1/04

(54) **VERFAHREN ZUR HERSTELLUNG VON CYCLOOLEFINCOPOLYMEREN MIT HOHER REISSFESTIGKEIT UND NIEDRIGER OPTISCHER DÄMPFUNG**
PROCESS FOR PRODUCING CYCLO-OLEFIN COPOLYMERS WITH HIGH TENACITY AND LOW OPTICAL ATTENUATION
PROCEDE POUR LA PREPARATION DES COPOLYMERES CYCLO-OLEFINIQUES A HAUTE RESISTANCE A LA RUPTURE ET A FAIBLE ATTENUATION OPTIQUE

(30) Priorität: 12.02.1993 DE 4304285
(43) Veröffentlichungstag der Anmeldung: 29.11.1995
(73) Patentinhaber: Ticona GmbH, 65451 Kelsterbach (DE)
(72) Erfinder: BREKNER, Michael-Joachim, D-60529 Frankfurt am Main (DE); DECKERS, Hellmuth, D-55218 Ingelheim (DE); OSAN, Frank, D-65779 Kelkheim (DE)
(86) Internationale Anmeldenummer: EP9400264
(87) Internationale Veröffentlichungsnummer: WO9418252

(56) Entgegenhaltungen:
- EP-A- 0 407 870
- EP-A- 0 485 893
- EP-A- 0 503 422
- DE-A- 4 104 392

## Beschreibung

Die Erfindung betrifft ein Verfahren zur Herstellung von thermoplastische Cycloolefincopolymere (COC), die eine hohe Reißfestigkeit und eine niedrige optische Dämpfung aufweisen.

Lichtwellenleiter werden zum Transport von Licht, z. B. zum Zweck der Beleuchtung oder der Signalübertragung, eingesetzt. Sie bestehen im allgemeinen aus einem zylindrischen, lichtführenden Kern, der von einer Mantelschicht aus einem ebenfalls transparenten Material mit einer geringeren Brechzahl umgeben ist. Flächige Lichtwellenleiter bestehen z. B. aus drei transparenten Schichten, wobei die beiden äußeren Schichten eine geringere Brechzahl als die Mittelschicht aufweisen. Die Leitung des Lichts erfolgt durch Totalreflexion an der Grenzfläche. Als transparente Materialien lassen sich Gläser oder (organische oder anorganische) Polymere einsetzen.

Das für den Einsatz als Lichtwellenleiter verbreitetste Polymer, Polymethylmethacrylat (PMMA), ist auf Grund seiner niedrigen Glastemperatur von ca. 106° C nur bis ca. 85° C einsetzbar. Andere bekannte transparente Thermoplaste mit höherer Glastemperatur, wie z. B. Polycarbonat oder aromatische Polyester, weisen aromatische Baugruppen im Molekül auf. Diese führen zu einer erhöhten Lichtabsorption im kurzwelligen Spektralbereich. Der Einsatz solcher Polymerer für Lichtweilenleiter ist beispielhaft beschrieben in A. Tanaka et al., SPIE Vol. 840 (1987).

Durch Reaktionen an Polymethacrylaten läßt sich die Wärmeformbeständigkeit verbessern. Beispielhaft sei die polymeranaloge Umsetzung von Polymethylmethacrylat zu Polymethacrylimid genannt. Auch die Copolymerisation von Poly(meth)acrylat mit Comonomeren wie Methacrylsäureanhydrid oder Methacrylnitril führt zu Polymeren mit höherer Wärmebeständigkeit gegenüber dem unmodifizierten PMMA. Ein anderer Weg zu transparenten Polymeren mit erhöhter Glastemperatur ist die Verwendung von (Meth)acrylsäureestern (per)halogenierter oder polycyclischer aliphatischer Alkohole oder von substituierten Phenolen. Letztere weisen aufgrund der aromatischen Bausteine ebenfalls eine erhöhte Lichtabsorption im kurzwelligen Spektralbereich auf. Die ersteren Verbindungen ergeben zwar transparente Polymere mit hohen Glastemperaturen, jedoch ist die Verarbeitbarkeit z. B. zu Lichtleitfasern aufgrund ihrer inhärenten Sprödigkeit schwierig oder unmöglich.

Alle beschriebenen Substanzklassen sind wegen ihrer polaren Natur hygroskopisch. Bei höherer Temperatur während der Verarbeitung kann es durch den Wassergehalt im Polymeren zu unerwünschten Abbaureaktionen kommen. Der praktische Gebrauchswert wird dadurch gemindert.

Eine geringere Wasseraufnahme zeigen jedoch thermoplastische COC, die darüber hinaus eine erhöhte Wärmeformbeständigkeit aufweisen. Die vollständige Abwesenheit von Chromophoren, wie Doppelbindungen jeglicher Art, läßt diese Polymeren besonders für optische Anwendungen geeignet erscheinen. Auch im Bereich der Lichtleitung sollten diese Kunststoffe einsetzbar sein (EP-A0-355 682, EP-A0-485 893).

Ein besonders wirtschaftliches Verfahren ist in der europäischen Patentanmeldung EP-A0-485 893 beschrieben. Dort werden hochreaktive Metallocene beschrieben, welche Cycloolefine, insbesondere das leicht zugängliche Norbornen, zu Copolymeren mit hoher Glastemperatur polymerisieren.
Versuche haben jedoch gezeigt, daß diese Copolymere relativ spröde sind. Es ist zwar bekannt, daß die Reißfestigkeit einer polymeren Faser durch Orientierung verbessert werden kann. Die Prozessierbarkeit ist jedoch schwierig, wenn das Polymer unmittelbar unterhalb der Glastemperatur versprödet, wie das bei den in der EP-A0-485 893 beschriebenen Polymeren der Fall ist.

COC können unter Verwendung spezieller Ziegler-Katalysatoren (EP-A0-355 682, EP-A0-485 893) hergestellt werden, wobei üblicherweise Aluminiumalkyle bzw. Aluminiumalkylchloride als Cokatalysatoren eingesetzt werden. Diese Verbindungen hydrolysieren jedoch während der beschriebenen Aufarbeitungsverfahrens zu extrem feinen, gelartigen Verbindungen, die schwer filtrierbar sind. Werden Aluminiumalkylchloride eingesetzt, entstehen bei der Aufarbeitung chlorhaltige Verbindungen, wie Salzsäure oder Salze, die ebenfalls schwer abtrennbar sind. Wird Salzsäure zur Aufarbeitung eingesetzt ((EP-A0-355 682, EP-A0-485 893), entstehen ähnliche Probleme. Insbesondere bei der Verarbeitung der so hergestellten COC tritt eine Braunfärbung auf. Neben einer genügend hohen Reißfestigkeit ist aber eine weitere wichtige Voraussetzung für den Einsatz eines Polymers zur Herstellung einer polymeren optischen Faser bzw. eines Lichtwellenleiters eine hervorragende Transparenz.

Die Aufgabe der Erfindung bestand darin, ein Verfahren zur Herstellung von COC zu entwickeln, die sich durch eine verbesserte Reißfestigkeit, eine niedrigere optische Dämpfung, eine erhöhte Glastemperatur und eine geringe Wasseraufnahme gegenüber dem Stand der Technik auszeichnen.

Es wurde nun gefunden, daß durch Copolymerisation von niederen alpha-Olefinen, cyclischen Olefinen und/oder polycyclischen Olefinen unter Verwendung eines Katalysatorsystems, bestehend aus mindestens einem Metallocen-Katalysator und mindestens einem Cokatalysator, COC mit einer hohen Reißfestigkeit von 55 - 100 bevorzugt 55 - 90 besonders bevorzugt 58 - 85 MPa hergestellt werden können, wenn Metallocen-Katalysatoren bestimmter Symmetrien eingesetzt werden. (Die Reißfestigkeit steigt mit steigendem Molekulargewicht.) Unterwirft man das nach der Copolymerisation entstandene Reaktionsgemisch einem speziellen Aufarbeitungsverfahren, so können aus dem gereinigten COC und einem transparenten Polymeren, dessen Brechungsindex geringer ist als der Brechungsindex des COC, Lichtwellenleiter mit einer niedrigen optischen Dämpfung von 0,1 - 5 dB/m, bevorzugt 0,2 - 2 dB/m und besonders bevorzugt 0,3 - 1,5 dB/m hergestellt werden.

Die Erfindung betrifft somit ein Verfahren zur Herstellung von COC mit einer hohen Reißfestigkeit, die durch CoPolymerisation von 0,1 bis 99,9 Gew.-%, bezogen auf die Gesamtmenge der Monomeren, mindestens eines Monomers der Formeln I, II, III oder IV 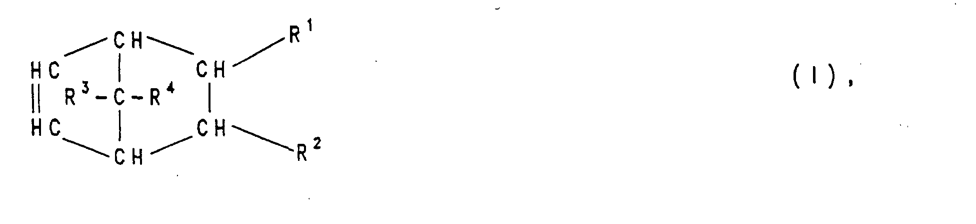 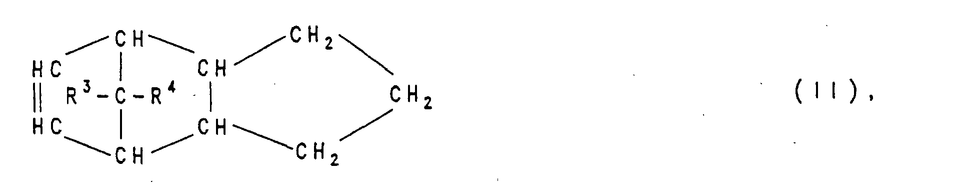 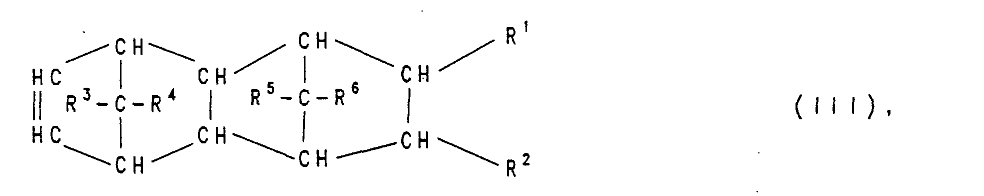 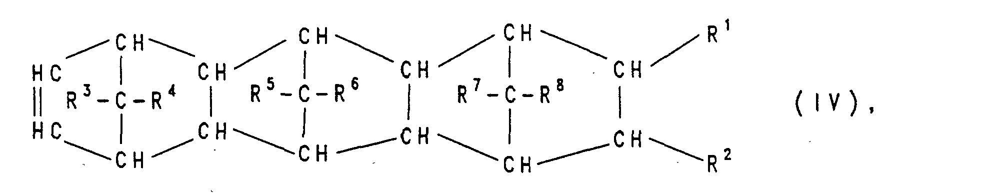 worin R¹, R², R³, R⁴, R⁵, R⁶, R⁷ und R⁸ gleich oder verschieden sind und ein Wasserstoffatom oder einen C₁-C₈-Alkylrest oder C₆-C₁₆-Arylrest bedeuten, wobei gleiche Reste in den verschiedenen Formeln eine unterschiedliche Bedeutung haben können,
0 bis 99,9 Gew.-%, bezogen auf die Gesamtmenge der Monomeren, eines Cycloolefins der Formel V 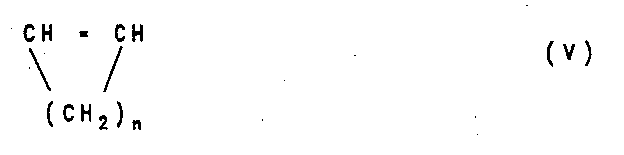 worin n eine Zahl von 2 bis 10 ist, und
0,1 bis 99,9 Gew.-%, bezogen auf die Gesamtmenge der Monomeren, mindestens eines acyclischen 1-Olefins der Formel VI 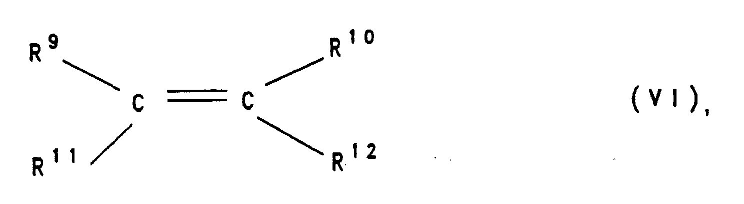 worin R⁹, R¹⁰, R¹¹ und R¹² gleich oder verschieden sind und ein Wasserstoffatom oder einen C₁-C₈-Alkylrest oder C₆-C₁₆-Arylrest bedeuten, in Lösung, in Suspension, in dem flüssigen Cycloolefinmonomer oder Cycloolefinmonomerengemisch oder in der Gasphase, bei einer Temperatur von-78 bis 150° C, bei einem Druck von 0,5 bis 64 bar, in Gegenwart eines Katalysators, welcher aus einem Metallocen als Übergangsmetallkomponente und einem Aluminoxan der Formel VII 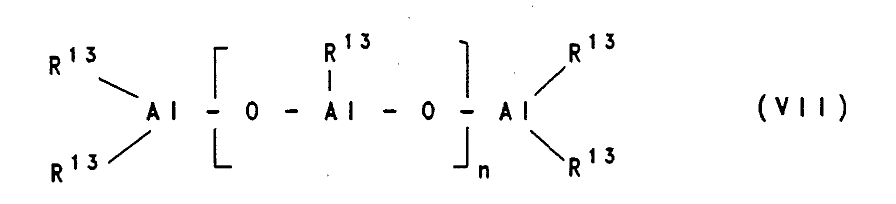 für den linearen Typ und/oder der Formel VIII 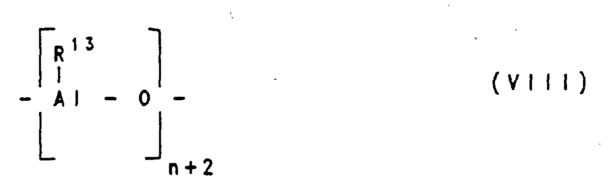 für den cyclischen Typ besteht, wobei in den Formeln VII und VIII R¹³ eine C₁-C₆-Alkylgruppe oder Phenyl oder Benzyl bedeutet und n eine ganze Zahl von 2 bis 50 ist, wobei die Polymerisation in Gegenwart eines Katalysators durchgeführt wird, dessen Übergangsmetallkomponente mindestens eine Verbindung der Formel IX 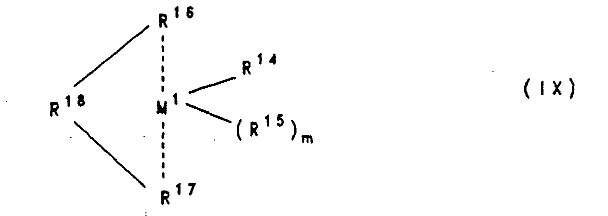 ist, worin M¹ Titan, Zirkon, Hafnium, Vanadium, Niob oder Tantal ist,
- R¹⁴ und R¹⁵: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
- m: eins oder zwei, je nach der Wertigkeit des Zenralatoms M¹, sein kann,
- R₁₈: 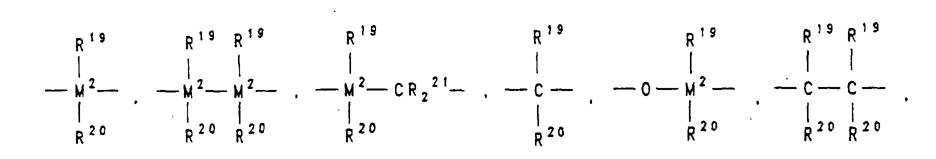
= BR¹⁹, = AIR¹⁹, -Ge-, -Sn-, -O-, -S-, = SO, =SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden,
- M²: Silizium, Germanium oder Zinn ist,
- R¹⁶ und R¹⁷: gleich oder verschieden sind und einen ein- oder mehrkernigen Kohlenwasserstoffrest, welcher mit dem Zentralatom M¹ eine Sandwichstruktur bilden kann, bedeuten, dadurch gekennzeichnet, daß das Metallocen der Formel IX für den Fall, daß R¹⁶ und R¹⁷ gleich sind, eine C₂-Symmetrie und für den Fall, daß R¹⁶ und R¹⁷ verschieden sind, eine C₁-Symmetrie in Bezug auf die Liganden R¹⁶ und R¹⁷ und auf das sie verbindende Zentralatom M¹ besitzt und daß das Reaktionsgemisch einem Reinigungsverfahren unterzogen wird, wobei in einem ersten Schritt das Reaktionsgemisch mit einem Filterhilfsmittel und mit einer Substanz, die die metallorganischen Verbindungen im Reaktionsgemisch ausfällt, suspendiert wird, in einem zweiten Schritt der heterogene Anteil filtriert wird und in einem dritten Schritt das gereinigte COC aus dem COC-Filtrat mit Hilfe eines Fällmittels ausgefällt wird oder das Lösungsmittel des COC-Filtrats abgedampft wird, und die erhaltenen Cycloolefincopolymere eine Reißfestigkeit im Bereich von 55 - 100 MPa, gemessen nach DIN 53457, und eine niedrige optische Dämpfung besitzen.
Im Schritt 3 können Abdampfverfahren eingesetzt werden, wie beispielsweise Abdampfen mit Hilfe einer Flashkammer, eines Dünnfilmverdampfers, ® List-Kneters (List, England), Entgasungsextruders oder eines ® Diskpacks (Farrel, USA).
Substanzen, die die metallorganische Verbindung im Reaktionsgemisch ausfällen, sind vorzugsweise polare Verbindungen, wie Wasser, Ethylenglycol, Glycerin und Essigsäure. Vorzugsweise ist das Suspendiermittel ein Kohlenwasserstoff. Als Filterhilfsmittel sind besonders geeignet Kieselgur, z.B.® Celite 545, (LuV, Hamburg), Perlite, z.B. ® Celite Perlite J-100 (LuV), modifizierte Cellulose, z.B. ® Diacel (LuV), geeignet sind auch poröser Kohlenstoff und absortive Asbestfasern.
Durch den Einsatz von Filterhilfsmitteln wird beim Filtrationsschritt eine gute Filtration erreicht. Es können kontinuierliche oder diskontinuierliche Filtertechniken eingesetzt werden. Die Filtration kann als Druckfiltration oder Zentrifugation durchgeführt werden. Vorzugsweise wird durch Drucknutschen, z.B. durch Filtrieren durch ein Vlies, oder durch Schälzentrifugation filtriert. Anwendbar sind auch andere herkömmliche Filtriertechniken. Die filtrierte COC-Lösung kann kontinuierlich oder diskontinuierlich mehrfach über den gleichen Filter geführt werden, damit die Filtrierwirkung weiter intensiviert wird.
Ein geeignetes Fällmittel ist Aceton, Isopropanol oder Methanol. Bei der Polymerisation wird mindestens ein polycyclisches Olefin der Formel I, II, III oder IV, vorzugsweise ein Cycloolefin der Formel I oder III, 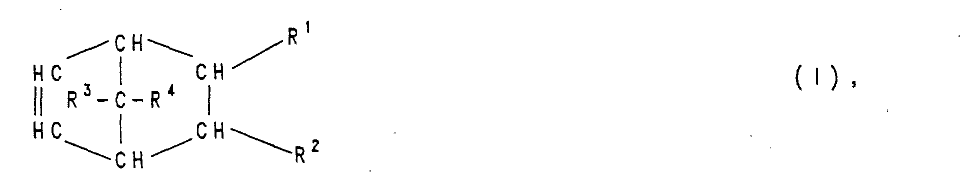 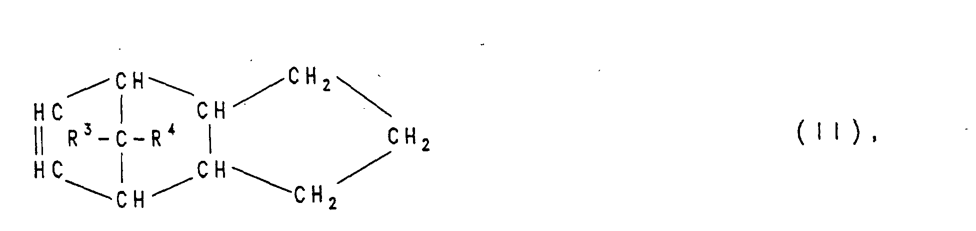 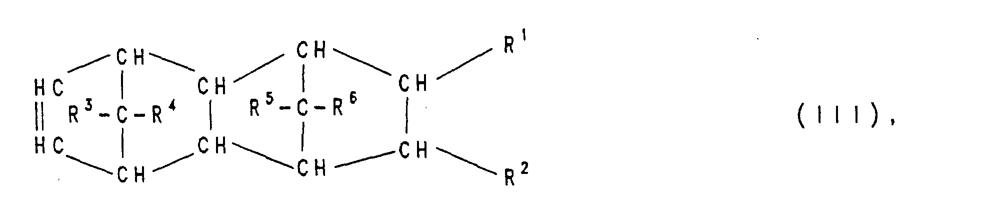 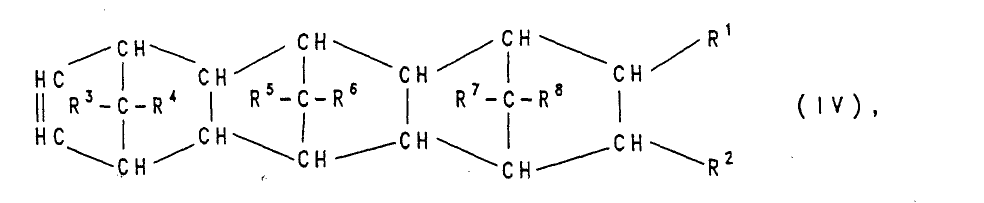
worin R¹, R², R³, R⁴, R⁵, R⁶, R⁷ und R⁸ gleich oder verschieden sind und ein Wasserstoffatom oder einen C₁-C₈-Alkylrest oder einen C₁-C₁₆-Arylrest bedeuten, wobei gleiche Reste in den verschiedenen Formeln eine unterschiedliche Bedeutung haben können, polymerisiert.
Gegebenenfalls wird auch ein monocyclisches Olefin der Formel V 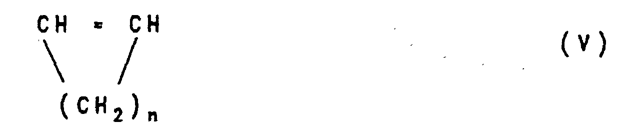 worin n eine Zahl von 2 bis 10 ist, verwendet.

Ein anderes Comonomer ist ein acyclischen 1-Olefins der Formel VI, 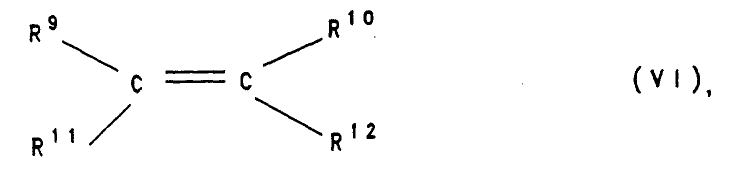 worin R⁹, R¹⁰, R¹¹ und R¹² gleich oder verschieden sind und ein Wasserstoffatom oder einen C₁-C₈-Alkylrest, der auch eine Doppelbindung enthalten kann, oder einen C₆-C₁₆-Arylrest bedeuten. Bevorzugt sind Ethylen, Propylen, Buten, Hexen, Octen oder Styrol. Besonders -bevorzugt ist Ethen. Darüber hinaus können auch Diene eingesetzt werden.

Insbesondere werden Copolymere von polycyclischen Olefinen der Formel I und II hergestellt.

Das polycyclische Olefin (I bis IV) wird in einer Menge von 0,1 bis 99,9 Gew.-%, das monocyclische Olefin (V) in einer Menge von 0 bis 99,9 Gew.-% und das acyclische 1-Olefin (VI) in einer Menge von 0,1 bis 99,9 Gew.-%, jeweils bezogen auf die Gesamtmenge der Monomeren, eingesetzt.

Die Monomeren werden vorzugsweise in folgenden Mengenverhältnissen eingebaut:
a) das molare Monomerverhältnis polycyclisches Olefin (I bis IV) zu 1-Olefin (VI) beträgt in den entsprechenden Polymeren 1:99 bis 99:1, vorzugsweise 20:80 bis 80:20;
b) bei Polymeren aus polycyclischen Olefinen (I bis IV) und monocyclischen Olefinen (V) beträgt das Molverhältnis polycyclisches Olefin zu monocyclischem Olefin 10:90 bis 90:10;
c) bei Polymeren aus polycyclischen Olefinen (I bis IV), monocyclischen Olefinen (V) und 1-Olefinen (VI) beträgt das molare Monomerverhältnis polycyclisches Olefin zu monocyclischem Olefin zu 1-Olefin 93:5:2 bis 5:93:2 bis 5:5:90, d.h. das Molverhältnis liegt innerhalb eines Mischungsdreiecks, dessen Ecken durch die Molverhältnisse 97:1:2, 5:93:2 und 5:1:94 festgelegt sind;
d) in den Angaben a), b) und c) sind als polycyclische Olefine, monocyclische Olefine und 1-Olefine auch gemische zweier oder mehrerer Olefine des jeweiligen Typs zu verstehen.

Der bei der Polymerisation verwendende Katalysator besteht aus einem Aluminoxan und mindestens einem Metallocen der Formel IX

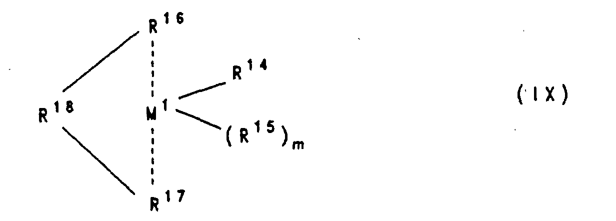

In Formel IX ist M¹ ein Metall aus der Gruppe Titan, Zirkon, Hafnium, Vanadium, Niob und Tantal, vorzugsweise Zirkon und Hafnium.
R¹⁴ und R¹⁵ sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor,
m eins oder zwei, je nach Wertigkeit des Zentralatoms M¹ sein kann,
R¹⁶ und R¹⁷ sind gleich oder verschieden und bedeuten einen ein- oder mehrkernigen Kohlenwasserstoffrest, welcher mit-dem Zentralatom M¹ eine Sandwichstruktur bilden kann.

Das Metallocen der Formel IX hat für den Fall, daß R¹⁶ und R¹⁷ gleich sind, eine C₂-Symmetrie und für den Fall, daß R¹⁶ und R¹⁷ verschieden sind, eine C₁-Symmetrie in Bezug auf die Liganden R¹⁶ und R¹⁷ und auf das sie verbindende Zentralatom M¹.

Bevorzugt ist R¹⁶ und R¹⁷ Indenyl und/oder Cyclopentadienyl oder alkyl- oder arylsubstituiertes Indenyl oder Cyclopentadienyl,
R¹⁸ ist eine ein- oder mehrgliedrige Brücke, welche die Reste R¹⁶ und R¹⁷ verknüpft und bedeutet 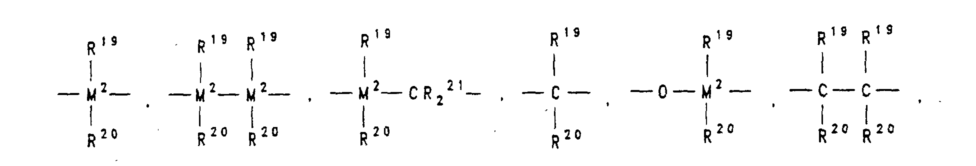 = BR¹⁹, = AIR¹⁹, -Ge-, -Sn-, -O-, -S-, = SO, = SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, vorzugsweise Chlor, eine C₁-C₁₀- vorzugsweise C₁-C₃-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀, vorzugsweise C₆-C₈-Arylgruppe, eine C₁-C₁₀, vorzugsweise C₁-C₄-Alkoxygruppe, insbesondere Methoxygruppe, eine C₂-C₁₀, vorzugsweise C₂-C₄-Alkenylgruppe, eine C₇-C₄₀, vorzugsweise C₇-C₁₀-Arylalkylgruppe, eine C₈-C₄₀, vorzugsweise C₈-C₁₂-Arylalkenylgruppe oder eine C₇-C₄₀, vorzugsweise C₇-C₁₂-Alkylarylgruppe bedeuten, oder R¹⁹ und R²⁰ oder R¹⁹ und R²¹ bilden jeweils zusammen mit den sie verbindenden Atomen einen Ring.

M² ist Silizium, Germanium oder Zinn, bevorzugt Silizium oder Germanium.

M¹⁸ ist vorzugsweise =CR¹⁹R²⁰, =SiR¹⁹R²⁰, =Ger¹⁹R²⁰, -O-, -S-, =SO, =PR¹⁹ oder =P(O)R¹⁹.

Die Metallocene können nach folgendem Reaktionsschema hergestellt werden:

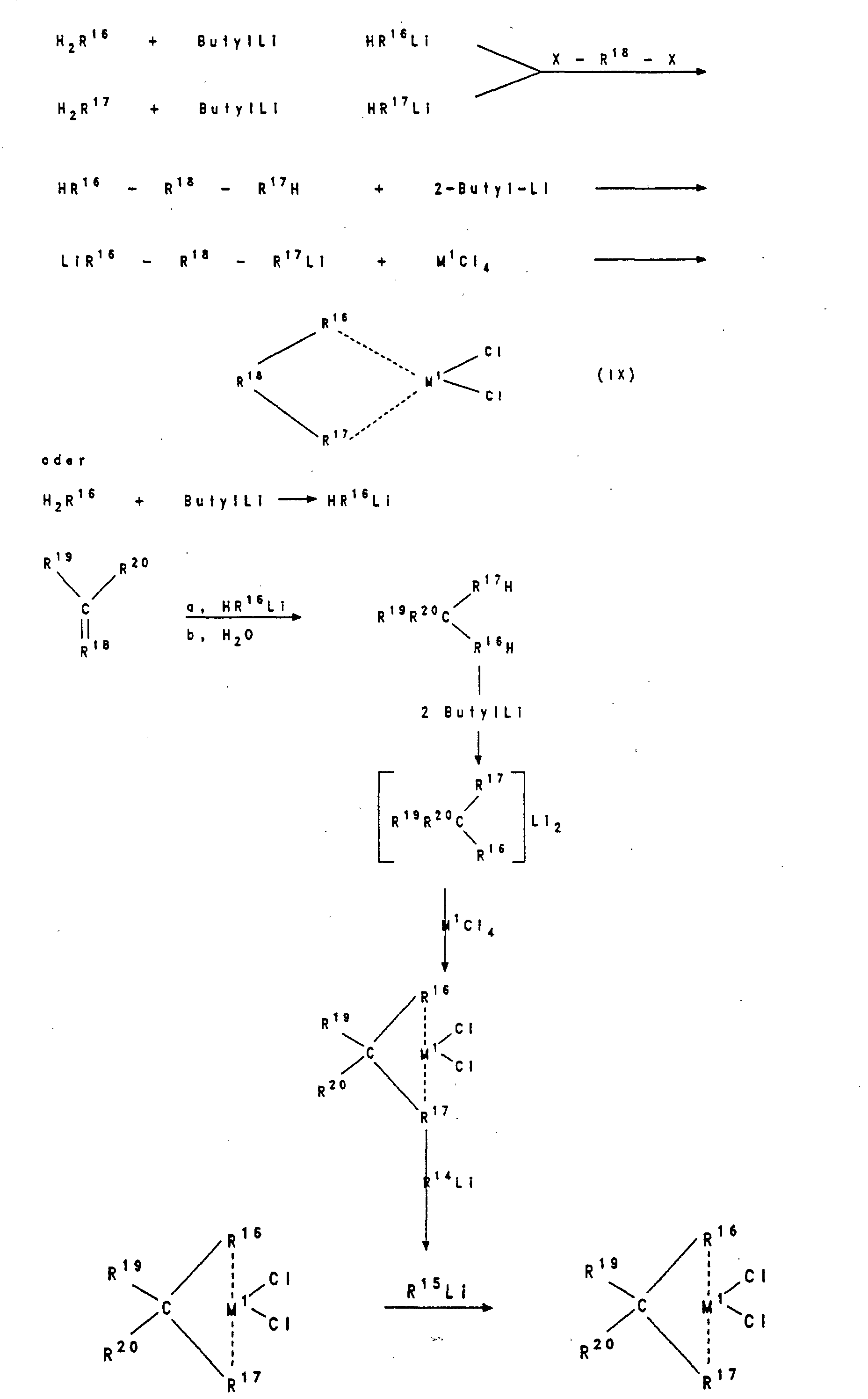

Das obige Reaktionschema gilt selbstverständlich auch für die Fälle R¹⁶=R¹⁷ und/oder R¹⁹ = R²⁰ und/oder R¹⁴=R¹⁵.

Bevorzugt eingesetzte Metallocene sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1'-indenyl)-zirkondichlorid,
rac-Ethylen-bis-(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-hafniumdichlorid,
rac-Diphenylsilyl-bis-(1-indenyl)-zirkondichlorid,
Isopropylen-(cyclopentadienyl)-(1-indenyl)-zirkondichlorid,
lsopropylen-((3-methyl)-cyclopentadienyl)-(1-indenyl)-zirkondichlorid,
Dimethylsilyl-(cyclopentadienyl)-(1-indenyl)-zirkondichlorid, oder deren Gemische. Dimethylsilyl-bis-(2-methyl-1-indenyl)-zirkondichlorid

Besonders bevorzugt sind dabei:
rac-Dimethylsilyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1'-indenyl)-zirkondichlorid,
rac-Ethylen-bis-(1-indenyl)-zirkondichlorid,
rac-Diphenylsilyl-bis-(1-indenyl)-zirkondichlorid,
lsopropylen-(cyclopentadienyl)-(1-indenyl)-zirkondichlorid,
Isopropylen-((3-methyl)-cyclopentadienyl)-(1-indenyl)-zirkondichlorid,
Dimethylsilyl-(cyclopentadienyl)-(1-indenyl)-zirkondichlorid, oder deren Gemische.

Der Cokatalysator ist ein Aluminoxan der Formel VII 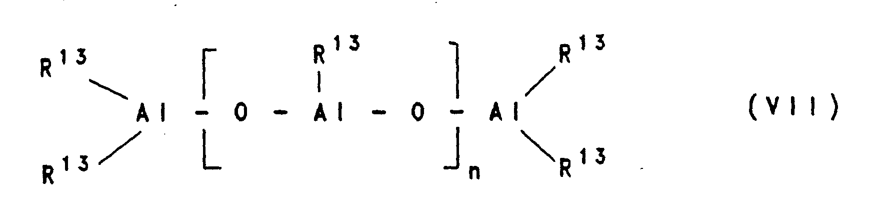 für den linearen Typ und/oder der Formel VIII 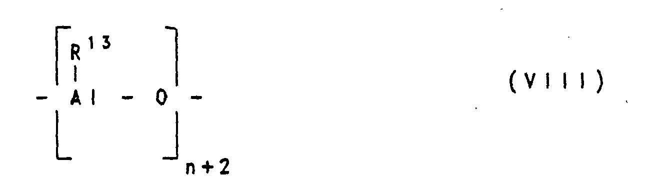 für den cyclischen Typ. In diesen Formeln bedeutet R¹³ eine C₁-C₆-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Bei einem der Verfahren wird fein gepulvertes Kupfersulfatpentahydrat in Toluol aufgeschlämmt und in einem, Glaskolben unter Inertgas bei etwa -20°C mit soviel Aluminiumtrialkyl versetzt, daß für je 4 Al-Atome etwa 1 mol CuSO₄·5H₂O zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfe2rsulfat abfiltriert und die Lösung im Vakuum eingeengt. Es wird angenommen, daß bei diesen herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100°C in einem inerten alipatischen ode raromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen Al₂(SO₄)₃·16H₂O und Al₂(SO₄)₃·18H₂O mit dem besonders hohen Kristallwassergehalt von 16 bzw. 18 mol H₂O/mol Al₂(SO₄)₃.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formel II und/oder III vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴- 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von-78°C bis 100°C, vorzugsweise 0 bis 70°C.

Eine deutlich längere Voraktivierung ist möglich, sie wirkt sich normalerweise jedoch weder aktivitätssteigernd noch aktivitätsmindernd aus, kann jedoch zu Lagerzwecken durch aus sinnvoll sein.

Die Polymerisation wird in einem für das Ziegler-Niederdruckverfahren gebräuchlichen inerten Lösemittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol, Dekalin und Xylol.

Schließlich kann auch das zu polymerisierende Monomere als Lösemittel oder Suspensionsmittel eingesetzt werden. Im Falle von Norbornen werden derartige Massepolymerisationen bei einer Temperatur oberhalb 45°C durchgeführt. Die Molmasse des Polymerisats kann in bekannter Weise geregelt werden; vorzugsweise wird dazu Wasserstoff verwendet.

Die Polymersiation wird in bekanter Weise in Lösung, in Suspension, in der flüssigen Cycloolefinmonomer oder Cycloolefinmonomergemisch oder in der Gasphase, kontinuierlich oder diskontinuierlich, ein- oder mehrstufig bei einer Temperatur von -78 bis 150°C, vorzugsweise -20 bis 80°C, durchgeführt. Der Druck beträgt 0,5 bis 64 bar und wird entweder durch die gasförmigen Olefine oder mit Hilfe von Inertgas erhalten.

Besonders vorteilhaft sind kontinuierliche sowie mehrstufige Verfahren, weil sie einen rationalen Einsatz des polycyclischen Verfahren das polycyclische Olefin, welches als Restmonomer zusammen mit dem Reaktionsgemisch zuführen.

Dabei wird die Metallocenverbindung in einer Konzentration, bezogen auf das Übergangsmetall, von 10⁻³ bis 10⁻⁷, vorzugsweise 10⁻⁵ bis 10⁻⁶ mol Übergangsmetall pro dm³ Reaktorvolumen angewendet. Das Aluminoxan wird in einer Konzentration von 10⁻⁴ bis 10⁻¹, vorzugsweise 10⁻⁴ bis 2·10⁻² mol pro dm³ Reaktorvolumen verwendet, bezogen auf den Gehalt an Aluminium. Prinzipiell sind aber auch höhere Konzentrationen möglich. Um die Polymerisationseigenschaften verschiedener Metallocene einzusetzen.

Bei der Herstellung von Copolymerisaten kann die Variation der Molverhältnisse des polycyclischen Olefins zum eingesetzten 1-Olefin in einem weiten Bereich erfolgen. Durch die Wahl der Polymerisationstemperatur, durch die Konzentration der Katalysatorkomponenten und das eingesetzte Molverhältnis läßt sich die Einbaurate an Comomomer nahezu beliebig steuern. Bei Norbornen wird eine Einbaurate von mehr als 40 mol% erreicht.

Die mittlere Molmasse des gebildeten Copolymers läßt sich durch Variation der Katalysatorkonzentration oder der Temperatur in bekannter Weise variieren.

Die Polydispersität M_{w}/Mₙ der Copolymeren ist mit Werten zwischen 1,9 - 3,5 recht eng. Dadurch resultiert ein Eigenschaftsbild der Polymerisate, das diese für das Extrudieren besonders geeignet macht.

Bei der Copolymerisation der polycyclischen Olefine mit den acylischen Olefinen, insbesondere mit Propylen, entstehen Polymere mit einer Viskositätszahl größer 20 cm³/g. Bei Copolymeren von Norbornen mit acyclischen Olefinen, insbesondere Ethylen, liegt die Glastemperatur oberhalb 100°C.

Zur Herstellung von Lichtwellenleitern werden die erhaltenen Polymeren, die dem oben beschriebenen Reinigungsschritt unterworfen und getrocknet worden sind, unter Verwendung eines Kolben- oder Schneckenextruders aufgeschmolzen und durch eine Düse gedrückt. Auf den entstehenden Faden wird eine Mantelschicht aus einem zweiten Polymeren aufgebracht, durch Coextrusion oder durch Beschichtung aus einer Lösung, wobei die Brechzahl des zweiten Polymeren niedriger als die des Kernmaterials ist. Als Mantelmaterial kommen in Frage Polymere und Copolymere aus 4-Methylpenten u.a. Olefinen, Copolymere von Ethylen und Vinylidenfluorid, gegebenenfalls unter Zusatz anderer Comonomeren wie z.B. Hexafluorpropen, Tetrafluorethylen, Terpolymere aus Tetrafluorethylen, Hexafluorpropen und Vinylidenfluorid, gegebenenfalls auch Ethylen, Copolymere von Methylmethacrylat und Methacrylsäureestern von (teil)fluorierten Alkoholen, z.B. Tetrafluor-n-propylmethacrylat.

Zur Herstellung von flächigen Lichtleitern werden die nach dem oben beschriebenen Verfahren gereinigten Polymeren in einem Extruder aufgeschmolzen und durch eine Breitschlitzdüse gedrückt. Die Reflexionsschicht auf der Oberfläche läßt sich durch Coextrusion oder durch Beschichtung aus Lösung mit einem zweiten Polymeren aufbringen, dessen Brechzahl niedriger als die des Kernmaterials ist.

Die Erfindung wird durch die nachfolgenden Beispiele erläutert.

### Beispiele

### Beispiel 1

Ein sauberer und trockener 75-dm³-Polymerisationsreaktor mit Rührer wurde mit Stickstoff und dann mit Ethylen gespült und mit 22 000 g Norbornenschmelze (Nb) und 6 Liter Toluol gefüllt. Unter Rühren wurde dann der Reaktor auf eine Temperatur von 70°C gebracht und 3,7 bar Ethylen aufgedrückt.
Danach wurden 500 cm³ toluolische Methylalumoxanlösung (10,1 Gew-% Methylaluminoxan mit Molmasse 1 300 g/mol nach kryoskopischer Bestimmung) in den Reaktor dosiert und die Mischung 15 min bei 70°C gerührt, wobei durch Nachdosieren der Ethylendruck bei 3,7 bar gehalten wurde. Parallel dazu wurden 1200 mg rac-Dimethylsilyl-bis(-1-indenyl)-Zirkoniumdichlorid in 500 cm³ toluolischer Methylaluminoxanlösung (Konzentration und Qualität siehe oben) gelöst und durch 15 minütiges Stehenlassen voraktiviert. Dann wurde die Lösung des Komplexes (Kat.Lösung) in den Reaktor dosiert. Zur Molekulargewichtsregelung wurden 0,4 Liter Wasserstoff vorgelegt. Während der Polymerisation wurden 500 ml Wasserstoff/Stunde kontinuierlich zudosiert. Unter Rühren (750 Umdrehungen pro Minute) wurde dann 2,5 Stunden bei 70°C polymerisiert, wobei der Ethylendruck durch Nachdosieren bei 3,7 bar gehalten wurde.
Die Reaktionslösung wurde in einem 150-Liter-Rührkessel abgelassen, in dem 500 g ® Celite 545 (LuV, Hamburg) oder wahlweise auch Cellulosefilterhilfsmittel (® Diacel, LuV, Hamburg), 200 ml Wasser, 0,5 g Peroxidzersetzer (® Hostanox SE10, Hoechst) und 0,5 g Antioxidans (® Hostanox 03, Hoechst) in 50 Liter einer hydrierten Dieselölfraktion (® Exsol, Siedebereich 100 - 120°C, Exxon) vorgelegt wurden. Bei 60°C wurde 30 min gerührt.
Auf dem Filtergewebe einer 120-Liter-Drucknutsche wurde ein Filterkuchen aus 500 g ® Celite (oder auch 500 g Cellulose), suspendiert in 10 Liter ® Exsol, aufgebaut. Die Polymerlösung wurde über die Drucknutsche filtriert. Dabei wurde so verfahren, daß das Filtrat zunächst 15 min in die Nutsche zurückgefördert wird.

Über der Lösung wurde ein Druck bis zu 2,8 bar Stickstoff aufgebaut.
Anschließend wurde über sieben Filterkerzen (Fluid Dynamics, Dynalloy XS64, 5*µ*m, 0,1 m²/Kerze), die in einem Stahlgehäuse montiert wurden, filtriert.
Die Polymerlösung wurde mittels eines Dispergators (® Ultraturax) in 500 Liter Aceton eingerührt und gefällt. Die Acetonsuspension wurde dabei über eine 680-Liter-Rührdrucknutsche bei geöffnetem Bodenventil im Kreis gefördert. Nach Schließen des Bodenventils wurde dreimal mit Aceton gewaschen. Der letzten Wäsche wurden 50 g Stabilisator (® Irganox 1010, Ciba) zugesetzt.
Im Anschluß an die letzte Filtration wurde das Produkt bei 100°C im Stickstoffstrom vorgetrocknet und im Trockenschrank bei 0,2 bar 24 Stunden nachgetrocknet.
Es wurde eine Produktmenge von 5070 g erhalten. An dem Produkt wurde eine Viskositätszahl (VZ) von 61 cm³ (DIN 51562) und eine Glastemperatur (T_{g}) von 179°C gemessen.

### Beispiel 2 (Vergleichsbeispiel zu Beispiel 1)

Ein sauberer und trockener 75-dm³-Polymerisationsreaktor mit Rührer wurde mit Stickstoff und dann mit Ethylen gespült und mit 22 000 g Norbornenschmelze (Nb) und 6 Liter Toluol gefüllt. Unter Rühren wurde dann der Reaktor auf eine Temperatur von 70°C gebracht und 3,7 bar Ethylen aufgedrückt.
Danach wurden 500 cm³ toluolische Methylalumoxanlösung (10,1 Gew-% Methylaluminoxan mit Molmasse 1 300 g/mol nach kryoskopischer Bestimmung) in den Reaktor dosiert und die Mischung 15 min bei 70°C gerührt, wobei durch Nachdosieren der Ethylendruck bei 3,7 bar gehalten wurde. Parallel dazu wurden 1200 mg rac-Dimethylsilyl-bis(1-indenyl)-Zirkoniumdichlorid in 500 cm³ toluolischer Methylaluminoxanlösung (Konzentration und Qualität siehe oben) gelöst und durch 15 minütiges Stehenlassen voraktiviert. Dann wurde die Lösung des Komplexes (Kat.Lösung) in den Reaktor dosiert. Zur Molekulargewichtsregelung wurden 0,4 Liter Wasserstoff vorgelegt. Während der Polymerisation wurden 500 ml Wasserstoff/Stunde kontinuierlich zudosiert. Unter Rühren (750 Umdrehungen pro Minute) wurde dann 2,5 Stunden bei 70°C polymerisiert, wobei der Ethylendruck durch Nachdosieren bei 3,7 bar gehalten wurde.
Dann wurde der Reaktorinhalt schnell in ein Rührgefäß abgelassen, in dem 200 cm³ Isopropanol (als Stopper) vorgelegt waren. Die Mischung wurde in Aceton ausgefällt, 10 min gerührt und dann der suspendierte polymere Feststoff abfiltriert. Das abfiltrierte Polymer wurde dann mit einer Mischung aus zwei Teilen 3-normaler Salzsäure und einem Teil Ethanol gegeben und 2 Stunden gerührt. Das Polymer wurde dann erneut abfiltriert, mit Wasser neutral gewschen und bei 80°C und 0,2 bar 15 Stunden getrocknet. Es wurde eine Produktmenge von 4830 g erhalten. An dem Produkt wurde eine Viskositätszahl VZ = 63 cm³ (DIN 51562) und eine Glastemperatur (T_{g}) von 178°C gemessen.

### Beispiel 3 (Vergleichsbeispiel zu Beispiel 1)

Es wurde analog zu Beispiel 1 verfahren. Als Katalysator wurde jedoch 350 mg Diphenylcarbyl-(cyclopentadienyl)-(9-fluorenyl)-zirkoniumdichlorid verwendet. Nach einer Reaktionszeit von 60 min, einem Ethylendruck von 3,4 bar und der Anwendung des in Beispiel 1 beschriebenen Aufarbeitungsverfahrens wurden 4160 g Polymer erhalten, an dem eine VZ von 62 cm³ (DIN 51562) und eine T_{g} von 181°C gemessen wurden.

**Tabelle 1**

| | COC (Beispiel 1) | COC(Beipiel 3) |
|---|---|---|
| Reißfestigkeit/MPa (DIN 53457) | 61 | 39 |
| | | |

### Beispiel 4

Das Polymer aus Beispiel 1 wird in einem Kolbenextruder bei einer Gehäusetemperatur von 230 bis 275° C aufgeschmolzen und mit einem Volumenstrom von 610 cm³/h durch eine Düse mit einem Innendurchmesser von 2 mm gedrückt. Ein Terpolymer aus Tetrafluorethylen, Vinylidenfluorid und Hexafluorpropen mit einem Schmelzflußindex von 32 g/10 min bei 265° C und einer Last von 11 kg wird in einem Kolbenextruder aufgeschmolzen mit einem Volumenstrom von 39 cm³/h zu einem konzentrisch um die Kerndüse angeordneten Ringspalt gefördert. Der entstehende Kern-Mantel-Faden wird in einem Spinnbad abgekühlt und mit einer Geschwindigkeit von 5,5 m/min aufgenommen. Zur Verbesserung der mechanischen Eigenschaften wird der Faden anschließend in einem Heißluftofen bei 190° C im Verhältnis von 1:2,5 verstreckt und danach aufgespult. Es wird ein Kern-Mantel-Faden mit einem Kerndurchmesser von 970 *µ*m und einem Manteldurchmesser von 1 mm erhalten.

| | |
|---|---|
| Reißfestigkeit | 8 cN/tex |
| Reißdehnung | 35 % |
| Opt. Dämpfung | 1,4 dB/m (650 nm) |

### Beispiel 5

Das Polymer aus Beispiel 2 wird in einem Kolbenextruder bei einer Gehäusetemperatur von 230 bis 275° C aufgeschmolzen und mit einem Volumenstrom von 610 cm³/h durch eine Düse mit einem Innendurchmesser von 2 mm gedrückt. Ein Terpolymer aus Tetrafluorethylen, Vinylidenfluorid und Hexafluorpropen mit einem Schmelzflußindex von 32 g/10 min bei 265° C und einer Last von 11 kg wird in einem Kolbenextruder aufgeschmolzen und ebenfalls mit einem Volumenstrom von 39 cm³/h zu einem konzentrisch um die Kerndüse angeordneten Ringspalt gefördert. Der entstehende Kern-Mantel-Faden wird in einem Spinnbad abgekühlt und mit einer Geschwindigkeit von 5,5 m/min aufgenommen. Zur Verbesserung der mechanischen Eigenschaften wird der Faden anschließend in einem Heißluftofen bei 190° C im Verhältnis von 1:2,5 verstreckt und danach aufgespult. Es wird ein Kern-Mantel-Faden mit einem Kerndurchmesser von 970 *µ*m und einem Manteldurchmesser von 1 mm erhalten.

| | |
|---|---|
| Reißfestigkeit | 7,8 cN/tex |
| Reißdehnung | 40 % |
| Opt. Dämpfung | 15,8 dB/m (650 nm) |

## Patentansprüche

1. Verfahren zur Herstellung eines Copolymerisats aus Cycloolefincopolymeren (COC) mit einer hohen Reißfestigkeit durch Copolymerisation von 0,1 bis 99,9 Gew.-%, bezogen auf die Gesamtmenge der Monomeren, mindestens eines Monomers der Formeln I, II, III oder IV 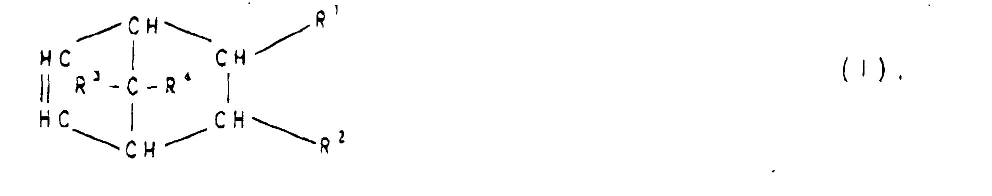 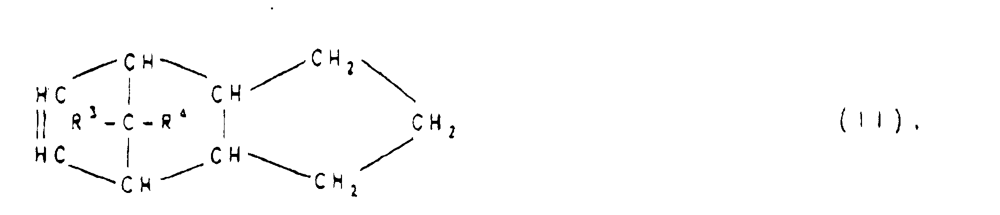 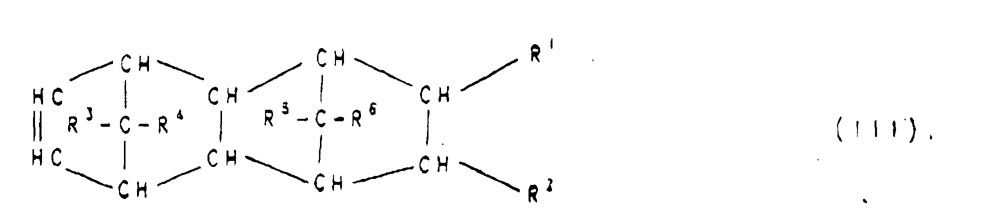 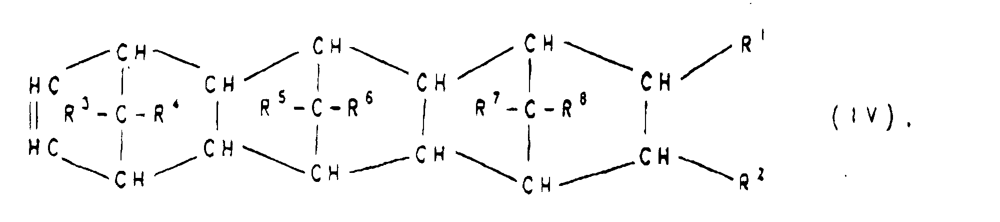 worin R¹, R², R³, R⁴, R⁵, R⁶, R⁷ und R⁸ gleich oder verschieden sind und ein Wasserstoffatom oder einen C₁-C₈-Alkylrest oder C₆-C₁₆-Arylrest bedeuten, wobei gleiche Reste in den verschiedenen Formeln eine unterschiedliche Bedeutung haben können,
0 bis 99,9 Gew.-%, bezogen auf die Gesamtmenge der Monomeren, eines Cycloolefins der Formel V 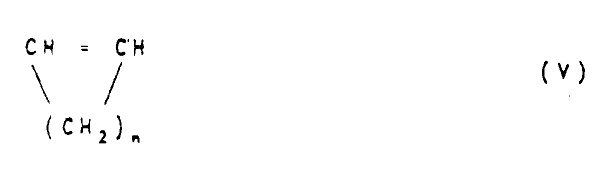 worin n eine Zahl von 2 bis 10 ist, und
0,1 bis 99,9 Gew.-%, bezogen auf die Gesamtmenge der Monomeren, mindestens eines acyclischen 1-Olefins der Formel VI 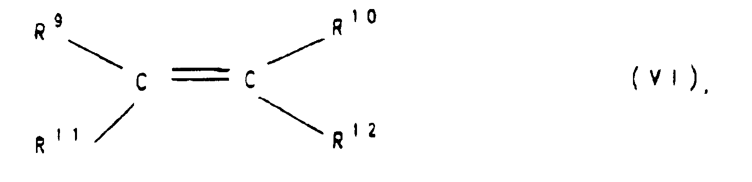 worin R⁹, R¹⁰, R¹¹ und R¹² gleich oder verschieden sind und ein Wasserstoffatom oder einen C₁-C₈-Alkylrest oder C₆-C₁₆-Arylrest bedeuten, in Losung, in Suspension, in dem flüssigen Cycloolefinmonomer oder Cycloolefinmonomergemisch oder in der Gasphase, bei einer Temperatur von -78 bis 150° C, bei einem Druck von 0,5 bis 64 bar, in Gegenwart eines Katalysators, welcher aus einem Metallocen als Übergangsmetallkomponente und einem Aluminoxan der Formel VII 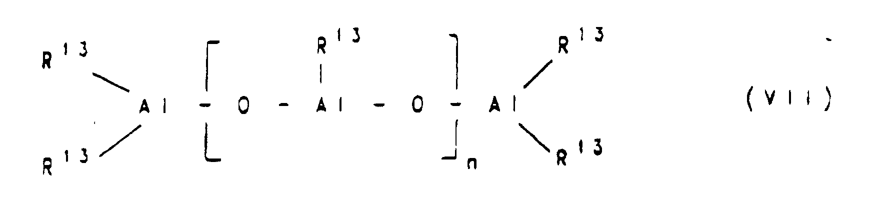 für den linearen Typ und/oder der Formel VIII 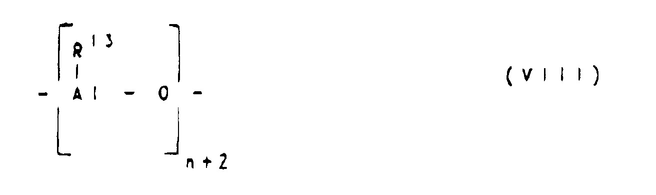 für den cyclischen Typ besteht, wobei in den Formeln VII und VIII R¹³ eine C₁-C₆-Alkylgruppe oder Phenyl oder Benzyl bedeutet und n eine ganze Zahl von 2 bis 50 ist. wobei die Polymerisation in Gegenwart eines Katalysators durchgeführt wird, dessen Übergangsmetallkomponente mindestens eine Verbindung der Formel IX 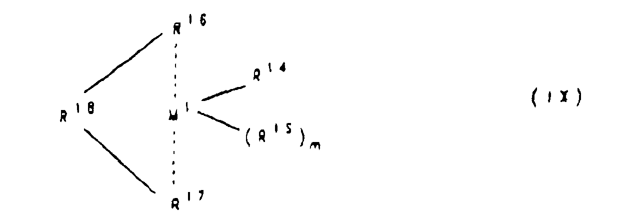 ist, worin
M¹ Titan, Zirkon, Hafnium, Vanadium, Niob oder Tantal ist
R¹⁴ und R¹⁵ gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten, und
m eins oder zwei je nach der Wertigkeit des Zentralatoms M¹, sein kann,
R₁₈ 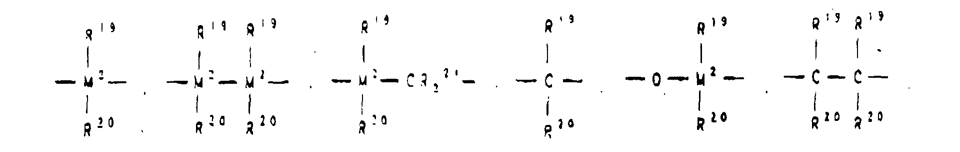
= BR¹⁹, = AIR¹⁹, -Ge-, -Sn-, -O-, -S-, = SO, = SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden,
M² Silizium, Germanium oder Zinn ist,
R¹⁶ und R¹⁷ gleich oder verschieden sind und einen ein- oder mehrkernigen Kohlenwasserstoffrest, welcher mit dem Zentralatom M¹ eine Sandwichstruktur bilden kann, bedeuten, **dadurch gekennzeichnet daß** das Metallocen der Formel IX für den Fall, daß R¹⁶ und R¹⁷ gleich sind, eine C₂-Symmetrie und für den Fall, daß R¹⁶ und R¹⁷ verschieden sind, eine C₁-Symmetrie in Bezug auf die Liganden R¹⁶ und R¹⁷ und auf das sie verbindende Zentralatom M¹ besitzt. und daß das Copolymerisat nach Ablauf der Copolymerisation einem Reinigungsverfahren unterworfen wird, wobei in einem ersten Schritt des Reinigungsverfahrens das Reaktionsgemisch mit einem Filterhilfsmittel und mit einer Substanz, die die metallorganischen Verbindungen im Reaktionsgemisch ausfällt, suspendiert wird, in einem zweiten Schritt der heterogene Anteil filtriert wird und in einem dritten Schritt das gereinigte COC aus dem COC-Filtrat mit Hilfe eines Fällmittels ausgefällt wird oder das Lösungsmittel des COC-Filtrats abgedampft wird und die erhaltenen Cycloolefincopolymere eine Reißfestigkeit im Bereich von 55 bis 100 MPa, gemessen nach DIN 53457, und eine niedrige optische Dämpfung besitzen.

2. Verfahren nach Anspruch 1, **dadurch gekennzeichnet, daß** als Katalysator ein Metallocen der Formel XI verwendet wird, worin R¹⁶ und R¹⁷ = Indenyl und/oder Cyclopentadienyl sind.

3. Verfahren nach Anspruch 1 oder 2, **dadurch gekennzeichnet, daß** als Metallocen Isopropylen-(cyclopentadienyl)-(1-indenyl)-zirkondichlorid verwendet wird.

4. Verfahren nach einem oder meheren der Ansprüche 1 bis 3, **dadurch gekennzeichnet, daß** als 1-Olefin Ethylen eingesetzt wird.

5. Verfahren nach einem oder mehreren der Ansprüche 1 bis 4, daß als 1-Olefin Ethylen und als polycyclisches Olefin Norbornen eingesetzt werden.

## Claims

1. A process for the preparation of a copolymer of a cycloolefin copolymer (COC) having high tear strength by copolymerization of 0.1 to 99.9% by weight, based on the total amount of the monomers, of at least one monomer of the formula I, II, III or IV 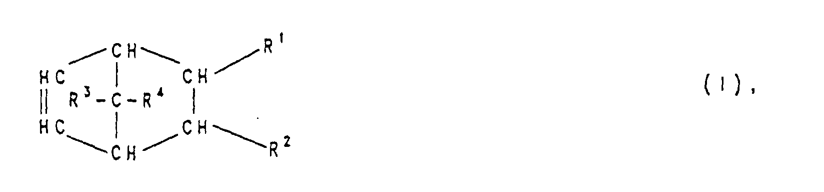 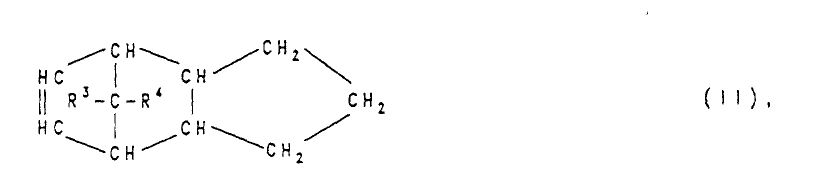 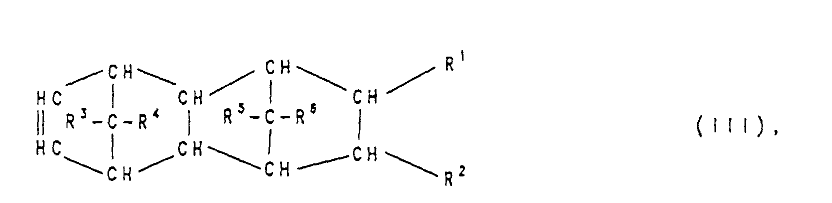 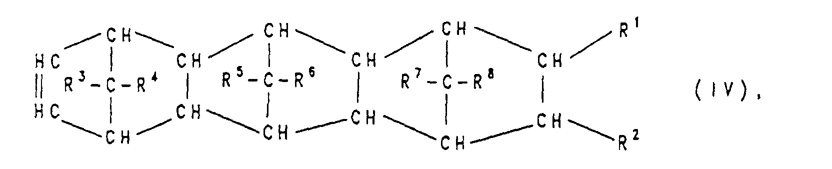
in which R¹, R², R³, R⁴, R⁵, R⁶, R⁷ and R⁸ are identical or different and are a hydrogen atom or a C₁-C₈-alkyl radical or a C₆-C₁₆-aryl radical, where identical radicals in the various formulae can have different meanings,
from 0 to 99.9% by weight, based on the total amount of the monomers, of a cycloolefin of the formula V 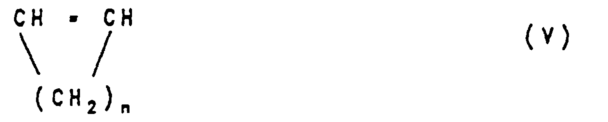
in which n is a number from 2 to 10, and
from 0.1 to 99.9% by weight, based on the total amount of the monomers, of at least one acyclic 1-olefin of the formula VI 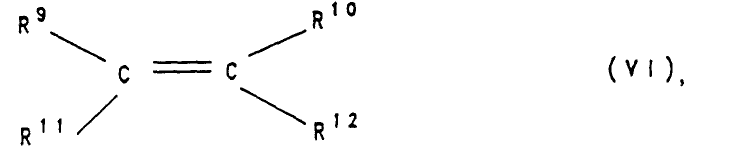
in which R⁹, R¹⁰, R¹¹ and R¹² are identical or different and are a hydrogen atom or a C₁-C₈-alkyl radical or a C₆-C₁₆-aryl radical, in solution, in suspension, in a liquid cycloolefin monomer or cycloolefin monomer mixture or in the gas phase, at a temperature of from -78 to 150°C, at a pressure of from 0.5 to 64 bar, in the presence of a catalyst comprising a metallocene as transition-metal component and an aluminoxane of the formula VII 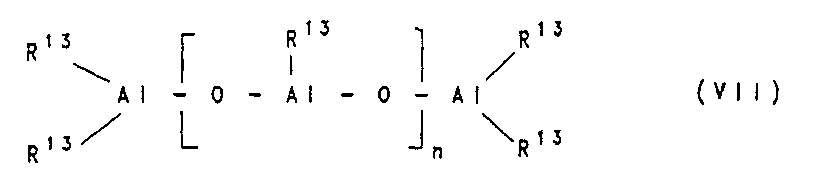
for the linear type and/or of the formula VIII 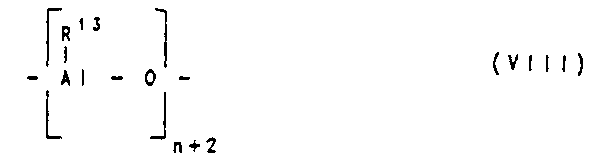
for the cyclic type, where, in the formulae VII and VIII, R¹³ is a C₁-C₆-alkyl group or phenyl or benzyl, and n is an integer from 2 to 50, where the polymerization is carried out in the presence of a catalyst whose transition-metal component is at least one compound of the formula IX 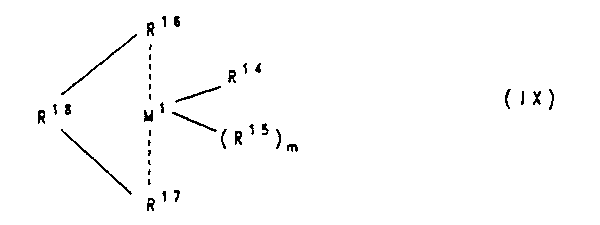
in which
M¹ is titanium, zirconium, hafnium, vanadium, niobium or tantalum,
R¹⁴ and R¹⁵ are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group, and
m may be one or two, depending on the valency of the central atom M¹,
R₁₈ is 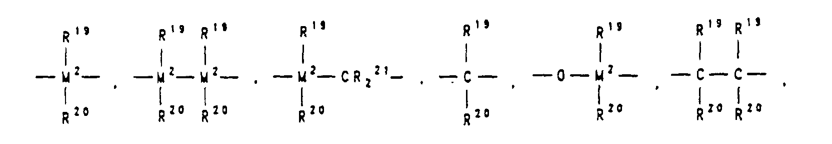
=BR¹⁹, =AlR¹⁹, -Ge-, -Sn-, -O-, -S-, =SO, =SO2, =NR¹⁹, =CO, = PR¹⁹ or = P(O)R¹⁹, where R¹⁹, R²⁰ and R²¹ are identical or different and are a hydrogen atom, a halogen atom, a C₁-C₁₀-alkyl group, a C₁-C₁₀-fluoro-alkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹⁹ and R²⁰ or R¹⁹ and R²¹, in each case with the atoms connecting them, form a ring,
M² is silicon, germanium or tin,
R¹⁶ and R¹⁷ are identical or different and are a monocyclic or polycyclic hydrocarbon radical which can form a sandwich structure with the central atom M¹, wherein the metallocene of the formula IX has C₂- symmetry with respect to the ligands R¹⁶ and R¹⁷ and with respect to the central atom M¹ connecting them in the case where R¹⁶ and R¹⁷ are identical and has C₁-symmetry in the case where R¹⁶ and R¹⁷ are different, wherein, when the copolymerization is complete, the copolymer is subjected to a purification process, in a first step of the purification process, the reaction mixture being suspended with a filtration aid and a substance which precipitates the organometallic compounds in the reaction mixture, the heterogeneous components being filtered off in a second step, and, in a third step, the purified COC being precipitated from the COC filtrate with the aid of a precipitant or the solvent of the COC filtrate being evaporated off, and the cycloolefin copolymers obtained having a tear strength of from 55 to 100 Mpa, measured in accordance with DIN 53457, and having a low optical attenuation.

2. The process as claimed in claim 1, wherein the catalyst used is a metallocene of the formula XI in which R¹⁶ and R¹⁷ are indenyl and/or cyclopentadienyl.

3. The process as claimed in claim 1 or 2, wherein the metallocene used is isopropylene(cyclopentadienyl)-(1-indenyl)zirconium dichloride.

4. The process as claimed in one or more of claims 1 to 3, wherein the 1-olefin employed is ethylene.

5. The process as claimed in one or more of claims 1 to 4, **characterized in that** the 1-olefin employed is ethylene and the polycyclic olefin employed is norbornene.

## Revendications

1. Procédé pour la préparation d'un copolymère choisi parmi les copolymères de cyclo-oléfines (COC) ayant une haute résistance à la traction, par copolymérisation de 0,1 à 99,9% en poids, par rapport à la quantité totale des monomères, d'au moins un monomère de formules I, II, III ou IV 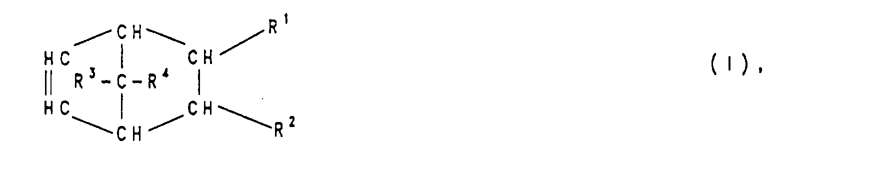 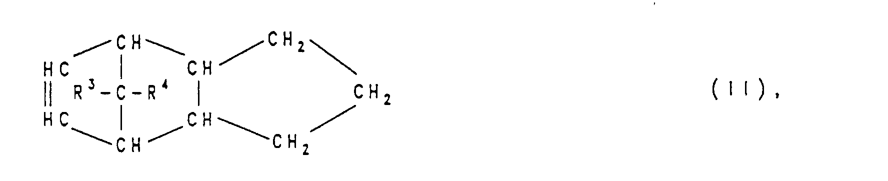 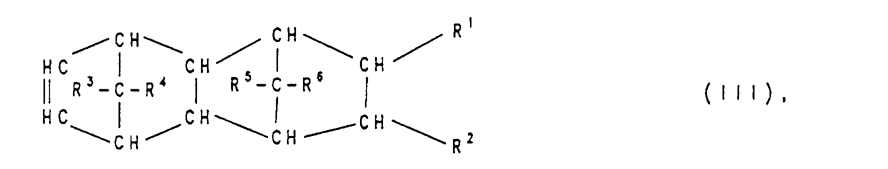 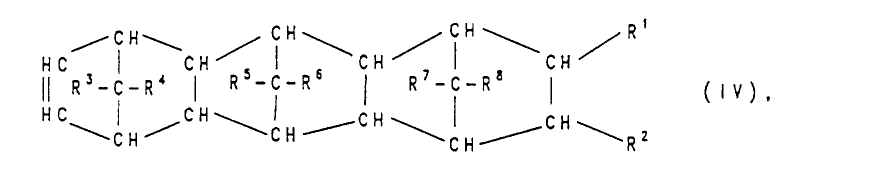 dans lesquelles R¹, R², R³, R⁴, R⁵, R⁶, R⁷ et R⁸ sont identiques ou différents et représentent un atome d'hydrogène ou un radical alkyle en C₁-C₈ ou un radical aryle en C₆-C₁₆, les mêmes radicaux dans les différentes formules pouvant avoir une signification différente,
de 0 à 99,9% en poids, par rapport à la quantité totale des monomères, d'une cyclo-oléfine de formule V 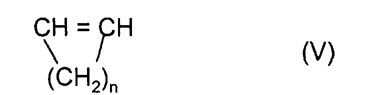 dans laquelle n est un nombre allant de 2 à 10, et de 0,1 à 99,9% en poids, par rapport à la quantité totale des monomères, d'au moins une 1-oléfine acyclique de formule VI 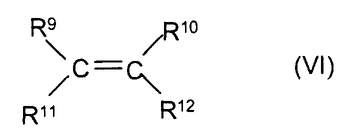 dans laquelle R⁹, R¹⁰, R¹¹ et R¹² sont identiques ou différents et représentent un atome d'hydrogène ou un radical alkyle en C₁-C₈, un radical aryle en C₆-C₁₆, en solution, en suspension, dans le monomère cyclo-oléfine ou mélange de monomères cyclo-oléfine, ou dans la phase gazeuse, à une température de -78 à 150°C, sous une pression de 0,5 à 64 bars, en présence d'un catalyseur qui consiste en un métallocène en tant que composant contenant un métal de transition et en un aluminoxane de formule VII 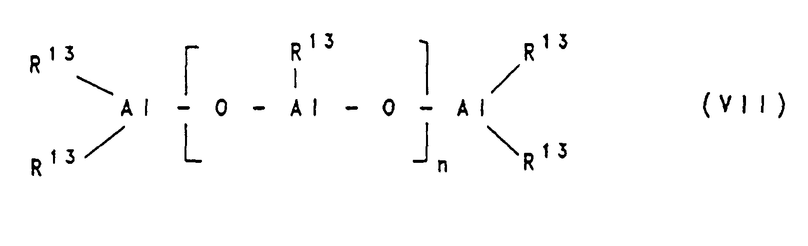 pour le type linéaire et/ou de formule VIII 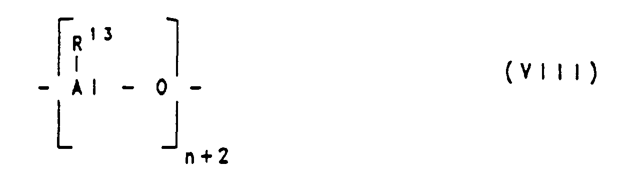 pour le type cyclique, dans les formules VII et VIII R¹³ représentant un groupe alkyle en C₁-C₆ ou phényle ou benzyle et n étant un nombre entier allant de 2 à 50, la polymérisation étant effectuée en présence d'un catalyseur dont le composant contenant un métal de transition est au moins un composé de formule IX 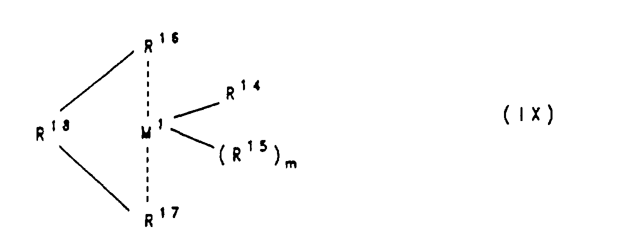 dans laquelle
M¹ est le titane, le zirconium, l'hafnium, le vanadium, le niobium ou le tantale,
R¹⁴ et R¹⁵ sont identiques ou différents et représentent un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe alkylaryle en C₇-C₄₀, un groupe alkylaryle en C₇-C₄₀ ou un groupe arylalcényle en C₈-C₄₀, et
m peut être un ou deux selon la valence de l'atome central M¹,
R¹⁸ est 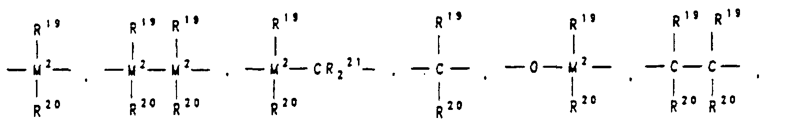 =BR¹⁹, =AlR¹⁹, -Ge-, -Sn-, -O-, -S-, =SO =SO₂, =NR¹⁹, =CO, =PR¹⁹ ou =P(O)R¹⁹, R¹⁹, R²⁰ et R²¹ étant identiques ou différents et représentant un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R¹⁹ et R²⁰ ou R¹⁹ et R²¹ forment, respectivement, avec les atomes auxquels ils sont liés, un cycle,
M² est le silicium, le germanium ou l'étain,
R¹⁶ et R¹⁷ sont identiques ou différents et représentent un radical hydrocarboné mono- ou polynucléaire qui peut former une structure en sandwich avec l'atome central M¹,
**caractérisé en ce que** le métallocène de formule IX, pour le cas où R¹⁶ et R¹⁷ sont identiques, a une symétrie en C₂ et, pour le cas où R¹⁶ et R¹⁷ sont différents, a une symétrie en C₁ par rapport aux ligands R¹⁶ et R¹⁷ et à l'atome central M¹ qui les relie, et **en ce que** le copolymère, une fois effectuée la copolymérisation, est soumis à un processus de purification, dans lequel, dans une première étape du processus de purification, le mélange réactionnel est mis en suspension avec un adjuvant de filtration et avec une substance qui précipite les composés organométalliques dans le mélange réactionnel, dans une deuxième étape la fraction hétérogène est séparée par filtration et dans une troisième étape le copolymère de cyclo-oléfine (COC) purifié est précipité à partir du filtrat contenant le COC, à l'aide d'un agent de précipitation, ou le solvant est éliminé par évaporation du filtrat contenant le COC, et les copolymères de cyclo-oléfine obtenus ont une résistance à la traction dans la plage de 55 à 100 MPa, mesurée selon DIN 53457 et une faible atténuation optique.

2. Procédé selon la revendication 1, **caractérisé en ce qu'**on utilise comme catalyseur un métallocène de formule XI, dans laquelle R¹⁶ et R¹⁷ représentent le groupe indényle et/ou le groupe cyclopentadiényle.

3. Procédé selon la revendication 1 ou 2, **caractérisé en ce qu'**on utilise comme métallocène le dichlorure d'isopropylène-(cyclopentadiényl)-(1-indényl)-zirconium.

4. Procédé selon une ou plusieurs des revendications 1 à 3, **caractérisé en ce qu'**on utilise l'éthylène comme 1-oléfine.

5. Procédé selon une ou plusieurs des revendications 1 à 4, **caractérisé en ce qu'**on utilise l'éthylène comme 1-oléfine et le norbornène comme oléfine polycyclique.
